(19) Europäisches Patentamt
European Patent Office
Office européen des brevets

(11) Publication number: **0 131 626**
**B1**

(12) # EUROPEAN PATENT SPECIFICATION

(45) Date of publication of patent specification: **24.05.89**

(51) Int. Cl.$^4$: **C 09 J 3/00,** C 09 D 5/14

(21) Application number: **84900793.5**

(22) Date of filing: **17.01.84**

(86) International application number:
**PCT/US84/00068**

(87) International publication number:
**WO 84/02915 02.08.84 Gazette 84/18**

(54) **ERODIBLE PAINTS FOR CONTROL OF MARINE FOULING.**

(30) Priority: **17.01.83 US 458377**

(43) Date of publication of application:
**23.01.85 Bulletin 85/04**

(45) Publication of the grant of the patent:
**24.05.89 Bulletin 89/21**

(84) Designated Contracting States:
**AT BE CH DE FR GB LI NL SE**

(56) References cited:
GB-A-1 584 943
GB-A-2 087 415
US-A-2 087 415
US-A-2 397 287
US-A-2 925 406
US-A-3 547 950
US-A-4 129 610
US-A-4 143 015
US-A-4 318 956
US-A-4 325 862

CHEMICAL ABSTRACTS, vol. 90, 1979, page 71, abstract 139163g, Columbus, Ohio, US; & JP - A - 78 124 538 (NITTO KASEI CO., LTD.) 31-10-1978

(73) Proprietor: **M&T CHEMICALS INC.**
**One Woodbridge Center**
**Woodbridge, NJ 07095 (US)**

(72) Inventor: **RUSSELL, David, B.**
**10 Barnett Place**
**Piscataway, NJ 08854 (US)**

Inventor: **GITLITZ, Melvin, H.**
**2 Vauxhall Court**
**Edison, NJ 08817 (US)**

Inventor: **LEINER, Howard, H.**
**315-C Jutland Drive**
**Cranbury, NJ 08512 (US)**

Inventor: **KHUDDUS, Mo, A.**
**2 Chestnut Court**
**Matawan, NJ 07747 (US)**

Inventor: **BERGER, Abe**
**11 Malvern Drive**
**Summit, NJ 07901 (US)**

(74) Representative: **Paget, Hugh Charles Edward et al**
**MEWBURN ELLIS & CO. 2/3 Cursitor Street**
**London EC4A 1BQ (GB)**



Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to marine antifouling paints which erode at a predetermined rate, and more particularly to a polymeric binder for an antifouling paint where the polymer includes moieties which hydrolyze at a predetermined rate in the presence of sea water.

Brief Description of the Prior Art

The superiority of antifouling paints based on organotin acrylate polymers over the old, conventional leaching type systems has been established by the major ship owners and marine paint companies. Such paint systems offer superior antifouling performance over extended periods because of a constant release of toxicant from the surface of the paint film by hydrolysis of the organotin acrylate copolymer in seawater, normally slightly alkaline.

In paint systems of this kind, the organotin acrylate copolymer serves as the film-forming component (binder).

The organotin portion of the copolymer provides a site for hydrolysis of the polymer by seawater (app. pH = 8.0 to 8.3), by which process the polymer surface is slowly converted to a water-soluble or water-swellable form which is able to be eroded away by moving seawater and expose a fresh paint surface.

In addition, the hydrolysis of the organotin polymer releases bis-tributyltin oxide, an effective antifouling toxicant.

In practice, additional toxicants are usually physically incorporated into the antifouling paint. These cotoxicants are released during the gradual hydrolysis and erosion of the organotin copolymer vehicle and serve to provide additional protection against fouling. An additional advantage claimed for such systems is fuel savings which results from a reduction in surface roughness as a consequence of water-planing or erosion of the paint film. Such systems can be designed to hydrolyze and erode at high or low rates by incorporating a retarder characterized by having a low seawater solubility as described in U.S. Patent 4,021,392, according to which a commercial paint cannot be formulated solely by adjusting the organotin monomer content in the organotin copolymer.

The mechanism by which organotin copolymer antifouling paints function is described in *Journal of Coatings Technology*, Vol. 53, Number 678, pages 46—52. Such paints, however, are relatively expensive and possess undesirable irritative properties due to the necessary presence of the hydrolyzable tributyltin moiety.

These paints represent a major improvement over the conventional, leaching-type paints wherein the cuprous oxide toxicant is dispersed in a binder consisting of a mixture of a film-forming insoluble resin and a water sensitive or slowly water-soluble component such as gum rosin. An example of such a "soluble matrix" paint formulation is given in Table A.

TABLE A

Soluble Matrix Copper Oxide Antifouling Paint
U.S. Navy 121/63 Formula

| Ingredient | kg | (Pounds) | litre | (Gallons) |
|---|---|---|---|---|
| Cuprous oxide | 635.32 | (1440) | 189.25 | (50.0) |
| Rosin | 97.40 | (215) | 91.22 | (24.1) |
| Vinyl Resin (VYHH) [(e)] | 24.95 | (55) | 17.79 | (4.7) |
| Tricresyl phosphate | 22.68 | (50) | 44.28 | (11.7) |
| Xylene | 52.16 | (115) | 60.94 | (16.1) |
| MIBK | 74.85 | (165) | 93.49 | (24.7) |
| Antisettling agent | 3.18 | (7) | 3.785 | (1.0) |

1:4 Resin:Rosin Ratio

(a) Union Carbide

Such paint systems, however, fail to provide a constant toxicant release, and moreover, do not erode in service. This is due to the selective extraction of the water-soluble component and consequent leaching of toxicant (cuprous oxide) from the interior of the paint film. A matrix of the insoluble vinyl resin component remains behind after the water-soluble component of the film (gum rosin) is leached away. Moreover, the spent paint film no longer controls fouling even though it might contain up to 30—40% of the initial level of cuprous oxide because water penetration required for leaching the copper to the surface is limited through the matrix of residual vinyl resin. Spent antifouling systems of this type do not provide a suitable base for repainting since they possess poor mechanical properties due to the voids in the film which result in poor adhesion of the new paint film.

Prior art attempts to incorporate toxicants into water soluble polymers and to use these as antifouling paints have also failed to produce the desired results. Such paints swell in seawater and cannot be expected to provide good mechanical properties and uniform control of fouling since the whole paint film

is weakened on prolonged water immersion. Even such paint compositions as described in British Patent Specification 1,584,943 do not provide optimum control of fouling because the paint binder consists of a physical mixture of water-insoluble and synthetic water-soluble polymeric binders wherein the synthetic water-soluble polymeric binder is substituted for the natural gum rosin of the previously described paint system. In the paint systems of British Patent Specification 1,584,943, the water-soluble polymeric component can be selectively extracted from the binder system by seawater leading to the same problems encountered with traditional vinyl/rosin systems. Moreover, on prolonged immersion in water, some portion of the water-soluble resin component can cause the film to absorb water and swell through out its thickness yielding a film with poor mechanical properties.

Simple acrylate ester copolymers are proposed as vehicles for paints which are gradually planed away by moving seawater in U.S. Patent No. 4,407,997. However, for such paints to surface erode, a major proportion of the pigment used must be a water-sensitive metalliferous pigment. In addition, such coatings must contain from 35—50% by volume of pigment with the higher levels being preferred. Highly insoluble pigments retard the dissolution of the paint film and must be kept below certain specified levels. It is thus evident that the pigment content is being dictated by the required dissolution rate. The ability fo the pigment content to control dissolution is claimed to be improved by the use of low molecular weight polymer as the paint binder as well as by the incorporation of hydrolyzable tributyltin acrylate groups into the polymer chain. These facts are consistent with the known water resistance of poly (methyl acrylate) films which as described in Kirk-Othmer Encyclopedia of Polymer Science and Technology (Vol. 1. pages 246—328, 1964), are only slightly attacked even by strong aqueous solutions of sodium hydroxide or sulfuric acid at room temperature. Thus, those paints described in British Patent Application 2,087,415A are much less dependent on the nature of the polymeric binder than on the high levels of water-sensitive pigments present. These pigments can be leached out by sea-water and the resulting empty matrix film, now devoid of reinforcing pigment particles, can be sufficiently weakened to be planed away by moving seawater. This method for protecting against surface growth is similar to the method by which chalking or self-cleaning mildew-resistant exterior house paints are obtained by the incorporation of zinc oxide and hydrophilic anatase titanium dioxide into paints based on acrylic or polyvinyl acetate resin polymers as described in *J. Paint Technology,* Vol. 46, No. 594 (July 1974), page 33. Such paints would be expected to have poor mechanical properties such as would make them unsuitable for underwater use for prolonged periods of time.

Further background is found in European patent application No. 0069559, which discloses that although triorganotins are effective antifouling agents, they are expensive to employ and there are some circumstances where the release of triorganotin ions is preferably avoided or reduced while still obtaining the benefits of smoothing of the paint in service by an erosion mechanism. The patent application discloses the substitution of quinolinyl (or substituted quinolinyl) groups for the organotin groups in acrylate copolymers. The approach of this disclosure replaces one expensive toxicant with another but fails to provide a means for controlling the erosion rate which is independent of the toxicant concentration.

The present invention provides an antifouling paint for protecting marine surfaces which comprises in combination:

(a) toxicant and

(b) a film forming water insoluble, seawater erodible, organotin free polymeric binder having recurring groups represented by the formula

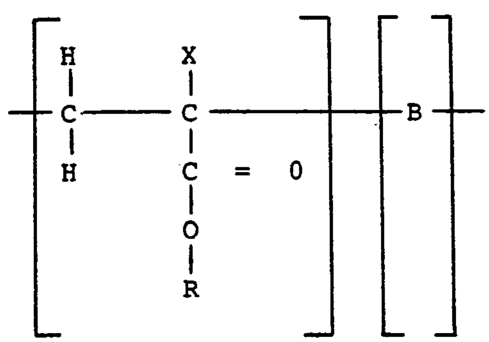

(1)

wherein X is H or $CH_3$; and

B is the residue of an ethylenically unsaturated monomer.

An antifouling coating composition of this general type is disclosed in Chemical Abstracts, Vol. 90, 1979, page 71, abstract 139163g, where the substituent R in the above formula is a quaternized amino alkyl group, which was discovered to provide better antifouling properties than the unquaternized amine.

The present invention is characterised in that R is represented by one of the formulae $—SiR'_3$ or $—Si(OR')_3$, where R' is alkyl or an aryl.

A further requirement of the polymer of the present invention is that its hydrolysis rate shall be at least $5 \times 10^{-4}$ milliequivalents per hour, whereby the paint has an erosion rate of at least two micrometers per month in seawater.

The polymer of the present invention can serve entirely as a toxicant delivery system, and is not dependent upon the hydrolysis of an organotin or bioactive component containing polymer. Thus, any effective antifoulant can be incorporated into the paint.

Superior control of fouling on shipbottoms is achieved by the use of coatings based on polymers which slowly hydrolyze in seawater and an inorganic or organic toxicant which is slowly released as the organic polymeric binder is hydrolyzed. The paint is produced from a binder polymer resulting from the copolymerization of (i) at least one acrylic or methacrylic ester having a functional group which produces a polymer which is hydrolyzable in seawater and (ii) one or more copolymerizable ethylenically unsaturated monomers.

It can be shown that conventional acrylate esters, e.g. ethyl acrylate, methyl methacrylate and butyl acrylate do not hydrolyze at a sufficient rate to be used in achieving a carboxylate containing polymer, which is sufficiently sensitive to erosion by the action of seawater, to produce an antifouling paint.

However, it is possible to modify the ester to produce enhanced hydrolytic sensitivity of the polymer. This can be accomplished by providing a functional group which assists or enhances the attack by hydroxyl ions or by weakening the ester bond.

The hydrolytically active monomer is represented by the formula

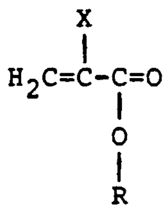

(2)

In the above formula R is $-SiR'_3$ or $-Si(OR')_3$, where R′ is an alkyl or an aryl, as for example triphenylsilyl acrylate. It should be understood that references to alkyls, aryls and the like is intended to include substituted alkyls, aryls, etc. Preferred alkyl groups have up to 6 carbon atoms, and may be primary secondary or tertiary alkyl.

It should be noted that reference to the monomer is not intended to indicate that the polymer must be synthesized by copolymerization of a particular monomer with a comonomer. For example, the polymer can be produced by adduct ion to a preformed acrylic or methacrylic acid polymer. The resultant polymer will include a recurring group represented by the structure

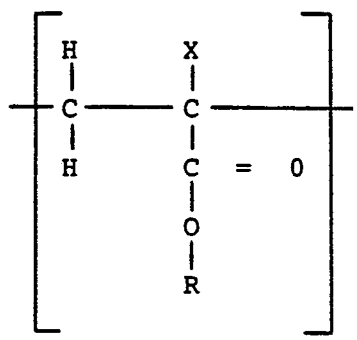

and the recurring group will correspond to the monomer

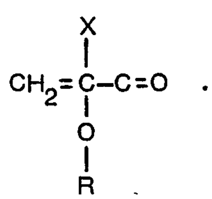

(2)

The paint formulation includes the polymeric binder, a solvent, a toxicant and can include a water sensitive pigment component, which can be a toxicant, inert pigments and fillers along with a retarder. U.S. Patent 4,260,535, British 2,087,415A and U.S. 4,191,579 are noted to contain descriptions of typical paint components and are incorporated by reference.

Antifouling toxicants include tributyltin fluoride, triphenyltin hydroxide, triphenyltin fluoride, tributyltin oxide, triphenyltin chloride, $Cu_2O$, ZnO, dithiocarbamate derivatives and cuprous thiocyanate.

The paint formulation employs sufficient solvent to enable the system to be applied to the surface to be protected. The pigment volume concentration (PVC) should be in the 10 to 50 range, and preferably is from about 30 to 45.

The upper limit for the hydrolysis of the polymer used in the paint is not of critical importance because

even with an excessively rapidly hydrolyzing polymer, a desired erosion rate can be achieved by proper selection of the ratio of functional group to polymer or copolymer or the use of a retarder as disclosed in U.S. Patents 4,021,392; 4,260,535; and British Patent 1,589,246, the disclosures of which are incorporated herein by reference.

The erosion rate of the paint is dependent upon the total contributions of the functional group, the comonomer and other components, such as toxicant(s), pigment(s), retarder(s), fillers, inerts or other nonvolatile components of the paint.

The functional group of the present invention can work in conjunction with known erosion rate controls or in place of known means to regulate the erosion rate.

The amount of the hydrolyzable acrylate or methacrylate to non-hydrolyzing, ethylenically-unsaturated comonomer, on a mole basis, in 100 parts of the copolymer, is from 10 to 80 parts.

The ethylenically unsaturated comonomers are well known in the film forming art and are identified for example, in British 2,087,415A, page 1, lines 56 to 59, and U.S. 4,021,392, column 4, lines 33 to 41, the disclosures of which are incorporated by reference.

The superior control of the erosion rate relies on chemically tailoring the polymer so that it is selectively weakened at certain points pendant to the polymer chain at the paint/water interface. These weak links are slowly attacked by seawater allowing the polymer to gradually become seawater soluble or seawater swellable. This weakens the hydrolyzed surface polymer film to such an extent that moving sea-water is able to wash off this layer and thus expose a fresh surface. By way of contrast with the prior art systems, in the system of the present invention the paint is relatively impermeable to seawater until hydrolysis of the outer microlayer takes place. The hydrolyzed microlayer is than sequentially removed by the water "friction".

A portion of the monomeric units are provided with functional groups which provide a site of weakness, that is, sites which tend to hydrolyze in the presence of seawater. The ratio of functionalized monomers to non-functionalized monomers is controlled to provide control of the erosion rate. Thus, unlike the system of the British Patent Application 2,087,415A which relies on the presence of high levels of water-sensitive pigments to provide erosion, the system of the instant invention is controlled by the levels and ratio of functional and inert monomers used to prepare the polymer.

The preparation of the hydrolytically active monomer (2) is illustrated by the following example:

Preparation of Tris(4-Methyl-2-Pentoxy)-Silyl Acrylate

0.23 moles of tris(4-methyl-2-pentoxy) silanol, 0.23 moles of triethylamine, 0.02gms. of methyl hydroquinone as polymerization inhibitor and 82cc of toluene were placed in a three necked flask equipped with a stirrer, addition funnel, a thermometer and a condenser. A solution of 0.23 moles of acryloyl chloride in 23cc of toluene was added slowly to the reaction mixture at 3—5°C. At the end of the addition, the mass is allowed to stir for ½ hour at 5°C. The solid triethylamine hydrochloride was filtered and the solvent was distilled under vacuum. The residual crude product was distilled (bp 148—162°C/4mbars) to give 41gms. of product (G.C. purity 80%).

The solution copolymerization of the hydrolytically active monomer (2) used in the present invention with an ethylenically unsaturated monomer can be illustrated by the following example of the solution polymerization of dimethylaminoethy methacrylate (DMAEMA) with a mixture of butyl and methyl methacrylates to form a 70 mole percent DMAEMA polymer

| Ingredients | Charge (parts) |
|---|---|
| DMAEMA | 36.9 |
| Butyl methacrylate (BMA) | 9.5 |
| Methyl Methacrylate (MMA) | 3.35 |
| Vazo 64[1] | 0.25 |
| High Flash Naphtha[2] | 50.0 |
| | 100.0 |

[1]DuPont's azo bis isobutyronitrile polymerization initiator.
[2]Amsco Solvents — can use xylene as replacement.

Procedure

1) charge all ingredients to a glass four neck resin reactor containing a stainless steel stirrer, condensor, nitrogen inlet, a thermometer with a temperature sensing-controlling head attached, and a glas-col heater.
2) under a nitrogen atmosphere, heat to 80°C in 1 hour, hold for 6 hours, cool to below 30°C, package.

The copolymer prepared by the above method does not now form part of the present invention, but the preparation of similar polymers using one of the hydrolytically active monomers (2) will be clear to those skilled in the art.

Paint compositions and methods of preparation are described below.

Paint A Composition

| Ingredient | grams/1500 ml paint |
|---|---|
| Xylene | 322.4 |
| Fumed Silica | 32.0 |
| Methanol | 5.8 |
| Polymer (1) of the present invention (50% solution in xylene) | 409.6 |
| Zinc Oxide | 679.2 |
| Organic Pigment[1] | 32.3 |
| Methyl Isobutyl Ketone | 118.1 |

Paint B Composition

| Ingredient | grams/1500 ml paint |
|---|---|
| Xylene | 260.7 |
| Fumed Silica | 29.7 |
| Polymer (1) of the present invention (50% solution in xylene) | 724.2 |
| Paint Stabilizer[2] | 30.0 |
| Cuprous Oxide | 1173.9 |
| Dispersing Aid[3] | 3.0 |
| Methyl Iosbutyl Ketone | 31.5 |

[1]A—2989 Toluidine Toner, Ciba-Geigy, Ardsley, N.Y.
[2]Viscostab, M & T Chemicals Inc., Rahway, N.J.
[3]Zonyl FSP, Dupont Co., Wilmington, Delaware.

Paint A Preparation

The fumed silica is dispersed in xylene with a moderate speed dispersator (Cowles-type). The methanol is added while stirring, followed slowly by half of the polymer solution. All the pigments are then added with moderate agitation and the resultant paste is ground in a water-cooled steel shot mill. The mill is washed with a mixture of the ketone and the remainder of the polymer solution and the washings are added into the paste. The entire paint is mixed and passed through the mill once more. The paint should be at a fineness of grind of 4—6 (Hegman gauge). The paint may be adjusted for a final viscosity of 1,000 to 1,500 cps (1 to 1.5 Pa.s) with solvent.

Paint B Preparation

The fumed silica is dispersed in xylene with a moderate speed dispersator (Cowles-type). One half of the polymer solution and one half of the paint stabilizer are slowly added, followed by the dispersing aid and the cuprous oxide. The resultant paste is ground in a water-cooled shot mill. The mill is washed with a mixture of the ketone and the remainder of the polymer solution and the stabilizer into the paste. The well-mixed paint is passed through the shot mill once more and checked for a desired fineness of grind (Hegman gauge) of 4—6. The paint is adjusted for a final viscosity of 1,000 to 1,500 cps (Brookfield) (1 to 1.5 Pa.s) with solvent.

The toxicant delivery system of the invention is capable of delivering toxicant at a substantially constant rate over the required time period. Moreover, the delivery rate is independent of the solubility characteristics of the toxicant, and consequently the minimum marine fouling prevention quantity of toxicant can be employed in the system. The avoidance of the requirement for excess toxicant can produce a significant cost savings, as compared to a system in which excess toxicant is used because of a nonuniform toxicant delivery rate and/or a need to optimize the hydrolysis rate of the system.

**Claims**

1. An antifouling paint for protecting marine surfaces, comprising in combination:

a) toxicant and

b) a film forming water insoluble, seawater erodible, organotin free polymeric binder having recurring groups represented by the formula

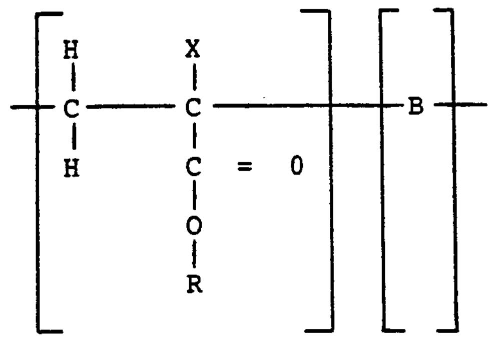

(1)

wherein

X is H or $CH_3$; and

B is the residue of an ethylenically unsaturated monomer

characterised in that R is represented by one of the formulae $—SiR'_3$ or $—Si(OR')_3$ where R' is alkyl or an aryl

said polymer having a hydrolysis rate of at least $5 \times 10^{-4}$ milliequivalents per hour whereby the paint has an erosion rate of at least 2 micrometers per month in seawater.

2. An antifouling paint according to claim 1 wherein R' is a $C_1$ to $C_6$ primary, secondary or tertiary alkyl.

3. An antifouling paint according to claim 1 wherein R' is phenyl.

4. A method of protecting a marine surface comprising coating said marine surface with an antifouling paint according to any one of claims 1 to 3.

5. An organotin free, water insoluble, seawater erodible film forming polymer having recurring groups represented by the formula

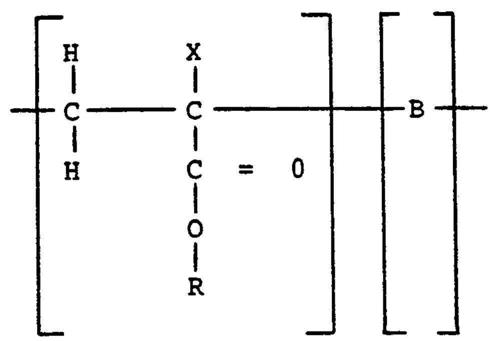

(1)

wherein

X is H or $CH_3$; and

B is the residue of an ethylenically unsaturated monomer

characterised in that R is represented by one of the formulae $—SiR'_3$ or $—Si(OR')_3$ where R' is alkyl or an aryl.

6. A polymer according to claim 5 wherein R' is a $C_1$ to $C_6$ primary, secondary or tertiary alkyl.

7. A polymer according to claim 5 wherein R' is phenyl.

**Patentansprüche**

1. Antifoulinganstrich zum Schutz von dem Meerwasser ausgesetzten Flächen, umfassend in Kombination:

(a) einen Giftstoff und

(b) ein filmbildendes, wasserunlösliches, mit Meerwasser erodierbares, organozinnfreies, polymeres Bindemittel mit periodisch wiederkehrenden Gruppen der Formel

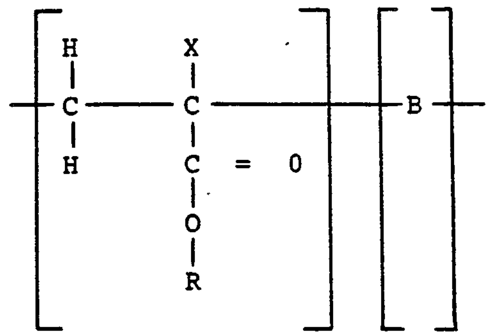

(1)

worin X für H oder $CH_3$ steht und B den Rest eines äthylenisch ungesättigten Monomers bedeutet, dadurch gekennzeichnet, daß R durch eine der Formeln $—SiR'_3$ oder $—Si(OR')_3$ dargestellt wird, worin R' Alkyl oder ein Aryl ist und das genannte Polymer eine Hydrolyserate von wenigstens $5 \times 10^{-4}$ Milliäquivalenten pro Stunde besitzt, wodurch der Anstrich eine Erosionsrate von wenigstens zwei Mikrometern pro Monat in Meerwasser aufweist.

2. Antifoulinganstrich nach Anspruch 1, worin R' ein $C_{1-6}$ primäres, sekundäres oder tertiäres Alkyl ist.

3. Antifoulinganstrich nach Anspruch 1, worin R' für Phenyl steht.

4. Verfahren zum Schutz einer dem Meerwasser ausgesetzten Fläche, umfassend das Beschichten der genannten dem Meerwasser ausgesetzten Fläche mit einem Antifoulinganstrich nach einem der Ansprüche 1 bis 3.

5. Organozinnfreies, wasserunlösliches, mit Meerwasser erodierbares, filmbildendes Polymer mit periodisch wiederkehrenden Gruppen der Formel

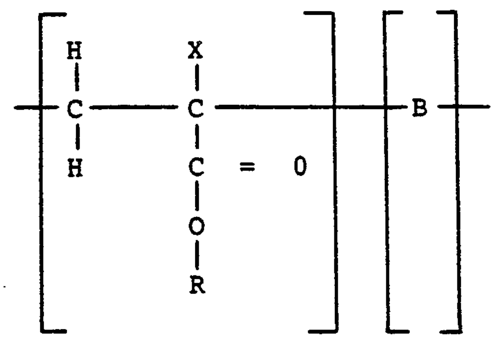

(1)

worin X für H oder $CH_3$ steht und B den Rest eines äthylenisch ungesättigten Monomers darstellt, dadurch gekennzeichnet, daß R durch eine der Formeln $—SiR'_3$ oder $—Si(OR')_3$ dargestellt ist, worin R' Alkyl oder ein Aryl bedeutet.

6. Polymer nach Anspruch 5, worin R' ein $C_{1-6}$ primäres, sekundäres oder tertiäres Alkyl ist.

7. Polymer nach Anspruch 5, worin R' Phenyl bedeutet.

**Revendications**

1. Peinture anti-encrassement pour la protection des surfaces marines, comprenant en combinaison:

a) un toxique et

b) un liant polymérique sans organo-étain, pouvant être érodé par l'eau de mer, insoluble dans l'eau et formant un film, ayant des groupes récurrents représentés par la formule

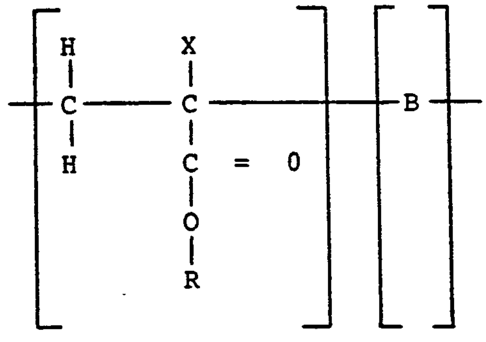

(1)

où X est H ou $CH_3$; et

B est le résidu d'un monomère à insaturation éthylénique

caractérisée en ce que R est représenté par l'une des formules —$SiR'_3$ ou —$Si(OR')_3$ où R' est alkyle ou aryle

ledit polymère ayant une allure d'hydrolyse d'au moins $5 \times 10^{-4}$ milliéquivalent par heure, la peinture ayant une allure d'érosion d'au moins 2 microns par mois dans l'eau de mer.

2. Peinture anti-encrassement selon la revendication 1, où R' est un alkyle primaire, secondaire ou tertiaire $C_1$ à $C_6$.

3. Peinture anti-encrassement selon la revendication 1, où R' est phényle.

4. Méthode de production d'une surface marine consistant à enduire ladite surface marine d'une peinture anti-encrassement selon l'une quelconque des revendications 1 à 3.

5. Polymère formant un film pouvant s'éroder à l'eau de mer, insoluble dans l'eau et sans organo-étain, ayant des groupes récurrents représentés par la formule

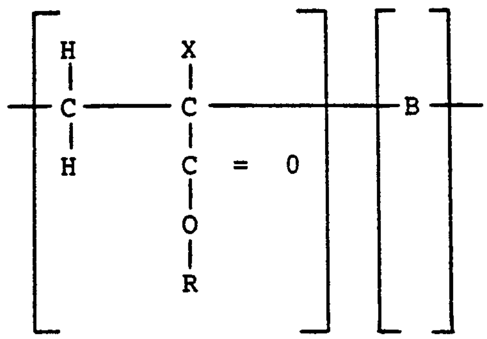

(1)

où X est H ou $CH_3$; et

B est le résidu d'un monomère à insaturation éthylénique

caractérisé en ce que R est représenté par l'une des formules —$SiR'_3$ ou —$Si(OR')_3$ où R' est alkyle ou un aryle.

6. Polymère selon la revendication 5, où R' est un alkyle primaire, secondaire ou tertiaire $C_1$ à $C_6$.

7. Polymère selon la revendication 5, où R' est phényle.